# FASCICULE DE BREVET EUROPEEN

(11) **EP 2 368 136 B1**
(45) Date de publication et mention de la délivrance du brevet: **20.11.2013**
(21) Numéro de dépôt: 09796006.6
(22) Date de dépôt: 22.12.2009
(51) Int. Cl.: G01S 13/92, G01S 13/56, G01S 13/58

(54) **DISPOSITIF RADAR AUTONOME ÉLECTRIQUEMENT**
ELEKTRISCH ABGESCHLOSSENES RADARGERÄT
ELECTRICALLY SELF-CONTAINED RADAR DEVICE

(30) Priorité: 23.12.2008 CH 20142008
(43) Date de publication de la demande: 28.09.2011
(73) Titulaire: Dzotech SA, 1744 Chénens (CH)
(72) Inventeur: BAYS, Jean-Nicolas, CH-1744 Chenens (CH); BAYS, Robert, CH-1752 Villars-sur-Glâne (CH)
(74) Mandataire: Saam, Christophe
(86) Numéro de dépôt international: PCT/EP2009/067818
(87) Numéro de publication internationale: WO 2010/072796

(56) Documents cités:
- EP-A- 0 308 324
- EP-A- 0 866 434
- DE-U1- 29 709 286
- FR-A- 2 449 899
- FR-A- 2 648 905
- US-A- 4 908 615
- US-A- 5 339 081
- US-A1- 2002 196 178
- US-A1- 2006 033 642

## Description

### Domaine technique

La présente invention concerne un dispositif radar autonome électriquement.

### Etat de la technique

Les radars à effet Doppler utilisés pour contrôler la vitesse des véhicules ont une consommation électrique importante, de l'ordre de 150 milliampères ou davantage. La plupart des radars fixes sont donc alimentés en permanence par le réseau électrique, ce qui occasionne des coûts de raccordement importants. Les radars mobiles sont souvent alimentés avec une batterie automobile pouvant stocker au moins 30 ampères-heures ; l'autonomie reste malgré tout limitée à quelques jours, et l'encombrement ainsi que le poids de la batterie limitent les possibilités d'application.

Il existe aussi des radars à main alimentés par une batterie de petit volume ; dans ce cas, la mesure de vitesse est déclenchée manuellement par l'opérateur au passage d'un véhicule. La consommation reste importante, et ces dispositifs ne permettent pas une mesure continue et sans assistance de la vitesse des véhicules sur un tronçon de route.

Il existe encore des systèmes de mesure de vitesse de véhicules qui emploient des ondes acoustiques au lieu d'ondes électromagnétiques ; ces dispositifs ne permettent cependant pas une mesure très précise de la vitesse de véhicules et leur consommation électrique est également importante.

FR2648905 décrit un dispositif pour apprécier le comportement général d'un certain nombre d'hommes, chaque homme étant pilote d'un corps en mouvement. Le document divulgue des moyens et un procédé pour délivrer un signal au moyen d'un capteur, amplifier et filtrer ledit signal pour avoir un signal utile dont le nombre d'impulsion est proportionnel à la vitesse du corps, compter le nombre d'impulsion se situant à l'intérieur d'une fenêtre de temps prédéterminée, comptabiliser soit un corps si le nombre d'impulsion dépasse un nombre affiché, soit le nombre total de corps. Le procédé permet en outre le relevé des mesures de vitesse, longueur, temps de présence devant le capteur et temps inter-corps avec un microordinateur. La consommation électrique est élevée car l'électronique reste toujours sous tension, même en l'absence de corps.

EP0308324 concerne des moyens d'émission-réception d'une onde électromagnétique et des moyens de calcul à partir de la fréquence Doppler de la vitesse d'un véhicule à surveiller. Le dispositif comporte un ou plusieurs capteurs passifs (par exemple un capteur de rayonnement infrarouge ou un microphone) dont le lobe de réception recouvre le faisceau d'émission-réception ainsi que des moyens d'enclenchement-déclanchement des moyens d'émission-réception commandés par le ou les capteurs, qui permettent l'enclenchement de l'émission de l'onde électromagnétique dès l'entrés du véhicule dans le lobe du capteur passif et l'arrêt de l'émission de ladite onde dès la sortie du véhicule dudit lobe. Ce document permet donc de réveiller le radar au passage d'un véhicule, afin d'assurer une plus grande autonomie de fonctionnement. A nouveau, la consommation électrique reste élevée car une grande partie du circuit électronique est sous tension même en l'absence de véhicule dans le lobe du capteur passif.

DE-U-29709286 concerne un système de détection des véhicules comprenant au moins un capteur infrarouge, une unité d'émission-réception, une unité d'alimentation avec une cellule solaire et une unité de control. Une unité de détection peut être constituée par un boîtier cylindrique et métallique, fermé sur un coté par une optique de Fresnel. A l'intérieur du boîtier il y a un PCB, avec des capteurs et d'amplificateurs, et un circuit imprimé pour élaborer le signal et pour une interface de communication radio. L'utilisation de capteurs radars est aussi suggérée comme alternative. Pour optimiser la consommation d'énergie, le système peut passer d'un mode de veille à un mode actif. L'unité de control peut forcer l'état de veille avec un modem radio.

EP0866434 et DE-U-29709286 concernent un système de détection de vitesse en mentionnant un standard de transmission sans fil. US 5339081 concerne un dispositif pour contrôler un feu rouge qui peut passer d'un mode de détection de présence des véhicules (mode FMCW - Frequency Modulated Continuous Wave) à un mode de détection de mouvement des véhicules (mode doppler). Normalement le mode FMCW est suivi par le mode doppler. Le dispositif comprend dans sa source d'émission un VCO et des moyens pour contrôler sa stabilité. Si le VCO est trouvé instable, le dispositif passe directement au mode doppler et désactive le mode FMCW. Ces moyens pour contrôler la stabilité du VCO sont activés après une compensation de la température du radar qui est performé périodiquement. Le dispositif ne peut pas détecter la présence des véhicules qui causent une modification de la fréquence pour effet doppler supérieure à un seuil déterminé, c'est-à-dire des véhicules qui ont une vitesse supérieure à une certaine valeur. jusqu'à seize radars synchronisés peuvent être utilisés : dans ce cas un circuit de communication indique la fonctionne de chaque radar - FMCW, doppler, les deux etc. L'alimentation du radar est cependant branchée sur le courant alternatif. La consommation électronique est élevée car l'électronique reste toujours sous tension, aussi pendant les « périodes mortes » entre l'envoi du signal FMCW et l'envoie du signal doppler, où le radar est adapté pour devenir un émetteur-récepteur avec une modulation de fréquence pour une communication bidirectionnelle avec un véhicule de patrouille.

### Bref résumé de l'invention

Il existe donc un besoin pour un dispositif radar fixe, alimenté par une batterie électrique de faible capacité et de faible volume, et utilisable sur une longue période sans remplacement de batterie.

Il existe en particulier un besoin pour un dispositif radar à effet Doppler avec une consommation électrique suffisamment réduite pour permettre une mesure de vitesse en continu sur une longue période, par exemple une période supérieure à 6 ou 12 mois, avec une batterie de faible volume. Avantageusement, la consommation moyenne du dispositif devrait donc être inférieure à 2 milliampères, au lieu des 150 milliampères des radars conventionnels.

Selon l'invention, ces objectifs sont notamment atteints au moyen d'un dispositif radar selon les caractéristiques de la revendication 1.

L'utilisation d'un module de détection de mouvement permet de réduire la consommation électrique de façon importante. Il existe en effet des modules destinés à détecter le déplacement de personnes dont la consommation électrique est remarquablement faible. Ces modules sont habituellement utilisés comme détecteurs d'intrusion dans des systèmes d'alarmes, ou pour allumer automatiquement des lampes ou des appareils lorsqu'une personne s'approche. Un des aspects de l'invention consiste à utiliser un tel module de détection de mouvement, fonctionnant habituellement dans la bande X, pour une application non prévue, c'est-à-dire la détection de véhicules et la mesure de vitesse.

Cette détection et cette mesure de vitesse sont possibles en traitant le signal Doppler fourni par le module avec un processeur de signal (DSP) pour la mesure de vitesse, notamment par une transformée de Fourier rapide du signal (FFT).

Dans un mode de réalisation, le circuit de détection et de mesure de vitesse comporte un amplificateur basse consommation et basse fréquence pour la détection de véhicule, et un amplificateur à plus haute fréquence et plus haute consommation, en combinaison avec le processeur de signal, (DSP) pour la mesure de vitesse.

La consommation du module de détection de mouvement et du DSP étant néanmoins trop importante pour une alimentation en continu avec une batterie portable, un des aspects de l'invention consiste à séparer clairement la détection de la mesure de vitesse, et à employer des éléments distincts pour ces deux fonctions. Selon un aspect, la détection de véhicule se fait avec un module Doppler alimenté de manière pulsée, tandis que la mesure de vitesse se fait avec le même module mais alimenté de manière continue suite à la détection d'un véhicule.

La détection de véhicule peut être utilisée pour contrôler l'alimentation du circuit de mesure de vitesse au travers de moyens de traitement, par exemple une logique câblée ou un microcontrôleur spécifique basse consommation, alimentés en permanence. Le microcontrôleur, ou la logique câblée, peut avoir une consommation très réduite et permet de sélectionner en fonction de différents paramètres les instants au cours desquels l'amplificateur haute fréquence et/ou le processeur de signal doivent être alimentés, ainsi que le rapport de cycle du module Doppler.

Des modules radars fonctionnant mode pulsé sont connus et employés notamment pour la détection de personnes. Cependant, la détection classique de personnes travaillent dans une gamme de fréquence de l'ordre de quelques Hz à au plus 100Hz et les amplificateurs basse-consommation correspondants peuvent amplifier correctement le signal Doppler à ces fréquences. Un véhicule automobile se déplaçant à 50km/h, voire 100km/h ou plus, génère une fréquence Doppler beaucoup plus élevée, au-delà de la bande passante d'un amplificateur basse-consommation. Par conséquent, la mesure de vitesse d'un véhicule automobile nécessite un amplificateur à large bande passante, dont la consommation électrique est cependant nettement plus importante.

Selon un mode de réalisation préférentiel, le module radar fonctionnant en mode pulsé est disposé et arrangé pour détecter le véhicule non pas frontalement lorsqu'il est au loin et s'approche ou s'éloigne rapidement du module, mais lors de son passage à côté du module radar. Le cosinus de l'angle entre la direction du véhicule et l'orientation du module radar étant à ce moment très réduit, la fréquence Doppler résultante à cet instant est également très faible. Le signal Doppler généré lorsque le véhicule passe près du radar peut donc être amplifié avec un premier amplificateur à basse fréquence et basse consommation, et détecté par exemple avec un simple comparateur fournissant un signal binaire au passage d'un véhicule. Ce signal peut ensuite être utilisé pour réveiller un deuxième amplificateur à haute fréquence (ou à large bande passante) et le processeur de traitement de signal, afin de mesurer la vitesse du véhicule lorsqu'il s'éloigne du module radar.

Le dispositif peut également être programmé de manière à employer la détection de véhicules seule, afin de compter les véhicules sans mesurer leur vitesse, prolongeant d'autant la durée de vie des batteries.

Le dispositif est de préférence dépourvu de tout affichage pour afficher la vitesse mesurée, et ne comporte pas non plus de caméra pour filmer ou photographier les véhicules. Cela permet de réduire encore la consommation du dispositif. Les données mesurées sont donc stockées dans une mémoire, et transmises à distance, le cas échéant, au travers d'une interface sans fil, par exemple une interface ZigBee, Bluetooth, cellulaire, etc.

Afin de détecter le passage de véhicule, le dispositif peut aussi comporter un magnétomètre ou un autre capteur qui envoie un signal correspondant aux moyens de traitement, par exemple au microcontrôleur basse-consommation. Le microcontrôleur envoie alors un ordre de réveil au module et/ou au processeur de signal, afin de mesurer la vitesse du véhicule détecté par le magnétomètre. Le microcontrôleur peut aussi être programmé pour effectuer une classification des véhicules en fonction de la vitesse mesurée, de la durée de passage du véhicule à proximité du système, de l'intensité et de la durée de la perturbation du champ magnétique. En fonction de ces paramètres, le véhicule détecté peut être classé comme véhicule léger, comme véhicule lourd, avec ou sans remorque, etc...

Le magnétomètre peut aussi être utilisé pour compter seulement le nombre de véhicules. Le nombre compté peut dépendre de l'importance de la perturbation du champ magnétique (classification des véhicules). Ce comptage est indépendant de la mesure de vitesse. Avantageusement, le magnétomètre peut être alimenté seulement lors de la détection d'un véhicule, diminuant ainsi très fortement sa consommation.

Un magnétomètre, à deux ou trois axes, peut également être utilisé pour déterminer l'angle de mesure du radar par rapport à l'axe de déplacement des véhicules.

L'usage d'un radar dans la bande X permet de limiter la taille des antennes, et donc le volume du dispositif.

### Brève description des figures

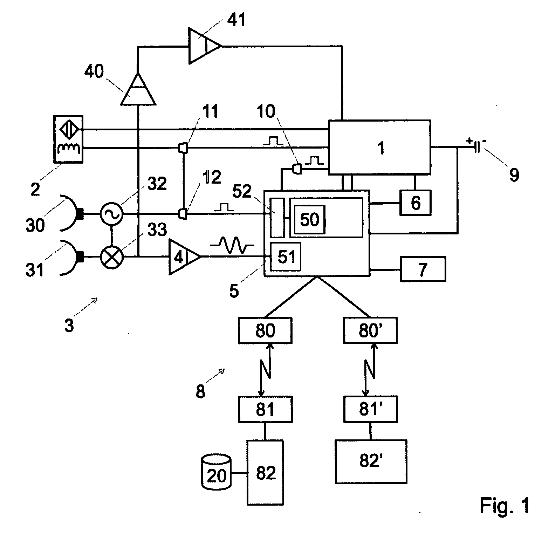

Des exemples de mise en oeuvre de l'invention sont indiqués dans la description illustrée par la figure annexée qui montre un schéma électrique d'un dispositif radar selon l'invention.

### Exemple(s) de mode de réalisation de l'invention

Le dispositif radar illustré à titre d'exemple sur la figure comporte des moyens de traitement, par exemple un microcontrôleur 1 ou un autre dispositif, programmable ou à logique câblée, à basse consommation et à fréquence réduite. Le microcontrôleur 1 reste en principe alimenté en permanence lorsque le dispositif radar est en fonction, et contrôle les autres éléments du circuit. Il est aussi possible d'utiliser un microcontrôleur capable de passer de lui-même d'un mode de veille à un mode de réveil, avec un cycle programmable ou en fonction d'événements détectés par un circuit externe à basse consommation.

Le microcontrôleur 1 reçoit des signaux d'un ou plusieurs capteurs externes, par exemple d'un comparateur 41 lié au travers d'un amplificateur basse consommation 40 au module Doppler 3 pulsé, ou d'un magnétomètre 2. Ces capteurs externes permettent de détecter le passage de véhicules dont on souhaite mesurer la vitesse ou que l'on souhaite compter ou classifier. D'autres types de capteurs capables de détecter la présence d'un véhicule, y compris des capteurs sonores, des barrières lumineuses, etc. peuvent aussi être utilisés. Un module Doppler 3 en mode pulsé ou éventuellement un magnétomètre présentent cependant l'avantage d'une consommation électrique très faible et d'un encombrement réduit.

Dans un mode de réalisation, la détection de passage de véhicule emploie donc un capteur externe comportant un magnétomètre, par exemple un magnétomètre à deux axes détectant le champ magnétique externe et les perturbations de ce champ par un véhicule. L'usage de deux axes offre l'avantage de permettre une détection plus fiable des véhicules, et permet en outre de déterminer la direction du Nord, ce qui peut être utile pour connaître l'orientation du dispositif radar par rapport à la route. Un troisième axe optionnel peut être utilisé afin de déterminer encore l'inclinaison du dispositif par rapport à l'horizontale ou/et mesurer la composante verticale du champ magnétique.

Le magnétomètre 2 est commandé par le microcontrôleur 1 au travers d'un circuit logique 11, afin d'effectuer une détection à intervalles prédéterminés compatibles avec la vitesse et la distance des véhicule à contrôler, par exemple toutes les secondes ou plusieurs fois par secondes. Dans le cas d'une mesure de vitesse de véhicules automobiles, des essais concluants ont été effectués avec une fréquence de 4 à 6 Hertz.

Dans un autre mode de réalisation, le capteur externe de détection de véhicule emploie le module Doppler 3 alimenté en mode pulsé, à une fréquence d'environ 500 Hz, avec des impulsions d'une durée d'environ 20 usec. Dans ce cas, un premier amplificateur opérationnel 40 à basse consommation et avec une faible bande passante amplifie le signal Doppler (décrit plus bas) à la sortie du mixeur 33. En l'absence de véhicule, ou lorsque la distance entre le véhicule et le module radar change rapidement, le signal Doppler est nul respectivement hors de la bande passante de l'amplificateur 40. En cas de passage d'un véhicule à proximité du radar, la fréquence du signal Doppler tombe cependant dans la bande passante de l'amplificateur 40, qui fournit un signal au comparateur 41. Cet amplificateur génère donc une impulsion transmise au microcontrôleur 1 en cas de passage d'un véhicule à proximité du système. Le microcontrôleur 1 réveille alors le processeur 5 au travers du circuit logique 10, ainsi que l'amplificateur haute fréquence 4, afin de procéder à une mesure de vitesse.

A nouveau, le signal à la sortie de l'amplificateur 40 et/ou du comparateur 41, ainsi que le signal fournit par le magnétomètre, peuvent être utilisés pour classifier les véhicules en fonction de leur longueur, de leur vitesse, etc.

D'autres types de capteur non illustrés peuvent être utilisés, par exemple un capteur de lumière ambiante afin de permettre une mise en mode de veille automatique de l'ensemble du dispositif, ou en tout cas du module 3 et du processeur 5, durant la nuit, ou une horloge afin de le mettre en mode de veille et de le réveiller à des heures programmables.

Le microcontrôleur 1 peut comporter un compteur, par exemple sous la forme d'une portion de code informatique pour compter le nombre de véhicules pendant une période donnée sur la base des signaux reçus du module Doppler 3 en mode pulsé, du magnétomètre 2 et/ou d'autres capteurs. Ce comptage peut être effectué indépendamment de la mesure de vitesse et sans nécessairement réveiller le processeur de signal 5 et l'amplificateur haute fréquence 4 à chaque véhicule. Il est aussi possible de ne compter que les véhicules d'une certaine classe (par exemple les camions, les automobiles légères, etc), le classement étant effectué sur la base des informations du module Doppler 3 en mode pulsé et/ou du magnétomètre.

Le dispositif radar comporte également un circuit radar avec une antenne de transmission 30 et une antenne de réception 31. Le circuit radar est de préférence réalisé à partir d'un module de détection de mouvement 3 basé sur des ondes électromagnétiques dans la bande X (de 8 à 12 GHZ environ). Le module a en outre un oscillateur 32 et un mixeur 33. Ces éléments sont de préférence montés dans un boîtier fermé, les antennes 30 et 31 étant constituées par des portions conductrices sur un premier circuit imprimé (PCB) fermant un des côtés du boîtier. Des modules appropriés sont par exemple fabriqués par la société ST Electronics Satcom & Sensor Systems, notamment sous le numéro de référence HB210. Le module 3 est de préférence alimenté avec une tension continue de 5 Volts.

Le signal radar émis par l'antenne de transmission 30 du module est généré par l'oscillateur 32 commandé par un circuit logique 12 en fonction de l'état de signaux logiques délivrés soit par le microcontrôleur 1 ou par un second processeur 5 décrit plus loin. Le signal radar réfléchi est reçu par l'antenne de réception 31 puis mélangé avec le signal de l'oscillateur à l'aide du mixeur 33, de façon à générer un signal Doppler à la sortie du module.

Ce signal Doppler est ensuite amplifié par l'amplificateur opérationnel basse consommation 40 et/ou par l'amplificateur à large bande passante 4, lorsque ce dernier est enclenché en mode mesure de vitesse. L'amplificateur opérationnel 40 est de préférence alimenté en permanence, alors que l'amplificateur à large bande passante 4, dont la consommation électrique est importante, est de préférence alimenté uniquement lorsqu'un véhicule a été détecté dont on souhaite mesurer la vitesse.

Le calcul de la vitesse est effectué à partir du signal Doppler au moyen d'un processeur de signal 5. Le signal Doppler amplifié est tout d'abord converti en un signal numérique au moyen d'un convertisseur analogique-numérique 51 qui peut avantageusement être intégré dans le processeur de signal 5. Le calcul de la vitesse est ensuite effectué à l'aide d'algorithmes conventionnels mettant en oeuvre une transformation de Fourier rapide à l'aide d'un module FFT 50, par exemple un module logiciel intégré dans le microcontrôleur 5. Afin de réduire la consommation, ce calcul de vitesse est avantageusement effectué à une fréquence temporairement élevée du processeur de signal 5 et uniquement lorsqu'un véhicule a été détecté par un capteur externe, par exemple un magnétomètre ou par le module Doppler 3 en mode pulsé, ou sur la base de tests effectués par le processeur 5 à partir du signal Doppler reçu, avant la conversion FFT.

La vitesse du véhicule calculée par le processeur 5 est ensuite écrite dans une mémoire semi-permanente 7, de préférence en association avec l'heure à laquelle la mesure a été effectuée. Cette heure est déterminée par un circuit d'horloge en temps réel 6, par exemple une horloge à quartz qui peut fournir aussi des signaux d'horloge au microcontrôleur 1 et au processeur de signal 5. D'autres informations peuvent aussi être associées à la mesure de vitesse. Par exemple, le microcontrôleur 1 et/ou le processeur de signal 5 peuvent comporter un classificateur, par exemple sous la forme d'une portion de code informatique exécutée par le microcontrôleur 1 ou le processeur 5 pour classer les véhicules détectés sur la base des signaux reçus par le magnétomètre 2, par d'autres capteurs et/ou du signal Doppler. Ainsi, un véhicule lourd, tel qu'un camion, causera une perturbation du champ magnétique plus importante et plus longue qu'une petite voiture ou qu'un deux-roues ; l'amplitude de cette perturbation peut donc être calculée par le microcontrôleur 1 et/ou par le processeur de signal 5. De la même façon, un véhicule lourd va réfléchir une plus grande portion du signal radar émis, et donc à vitesse égale modifier le signal Doppler d'une façon différente d'un véhicule plus petit. D'autre part, on peut exploiter la durée de la perturbation du champ magnétique en combinaison avec la vitesse du véhicule pour évaluer la longueur de ce véhicule.

Une ou plusieurs de ces informations peuvent être exploitées par le dispositif radar pour déterminer le type de véhicule dont la vitesse a été mesurée, et éventuellement pour supprimer des mesures correspondant à des erreurs ou à des véhicules dont on ne souhaite pas déterminer la vitesse.

Après le calcul et l'écriture de ces données dans la mémoire 7, le processeur de signal 5 retourne ensuite en mode de détection de véhicule, de lui-même ou suite à une instruction du microcontrôleur 1. L'amplificateur 4 est de préférence également mis hors tension.

Les données calculées par le dispositif peuvent être transmises à un module de communication à longue distance optionnel 8, par exemple un module de communication de données cellulaire, par exemple une carte de communication 80 de type GSM, GPRS, EDGE ou UMTS par exemple. Ce module 8 peut les envoyer à un serveur distant 82 muni d'un récepteur correspondant 81 et d'une banque de données 20. La transmission peut être initiée par le dispositif radar, par exemple à chaque passage de véhicule, après un nombre prédéterminé de passage, à heures fixes, ou en cas d'événements particuliers (par exemple en cas de détection de vitesse au-dessus d'un seuil). Dans une variante, la transmission est initiée par le serveur externe qui envoie au dispositif radar des commandes interprétées par le microcontrôleur 1 et/ou le processeur 5 pour accéder en lecture à la mémoire 7.

Dans une variante, ou en addition, les données calculées suite au passage d'un véhicule peuvent aussi être transmises à une carte de communication à faible portée 80', par exemple une carte de type ZigBee, Bluetooth, WLAN etc. Ces données peuvent ainsi être envoyées à/ou lues depuis un dispositif externe 82' disposant d'une interface 81' compatible. Cela permet par exemple à un opérateur passant à proximité du dispositif radar de relever les données stockées dans la mémoire 7. Dans un autre mode de réalisation, les données sont transmises via cette interface 80'-81' à un dispositif d'affichage ou un indicateur 82' autonome électriquement, afin d'afficher un signal ou une indication de vitesse lisible par le conducteur du véhicule mesuré.

Dans une variante, le signal réfléchi peut être utilisé, éventuellement après passage dans un comparateur, pour déterminer le sens de déplacement d'un véhicule dans le cas des routes à deux sens, par exemple des autoroutes, en vérifiant si l'écart entre deux flancs successifs du signal augmente (le véhicule s'éloigne) ou diminue (le véhicule s'approche). De cette façon le dispositif peut effectuer des mesures des vitesses dans un seul sens de déplacement, et écarter de la mesure les véhicules roulant en sens inverse.

Dans une variante, le dispositif peut comprendre un module GPS, qui peut être aussi inclus dans le système GSM ou être réalisé sous la forme d'une carte SIM dans ce module. L'utilisation de deux dispositifs avec GPS placés l'un de l'autre à une distance connue permet de calculer la vitesse d'un véhicule avec une très grande précision, le GPS permettant de synchroniser lesdits dispositifs de façon fiable et de déterminer l'instant de mesure avec précision. En outre, grâce au GPS, la localisation des dispositifs est connue et peut être transmise à une centrale.

Afin de réduire la consommation, le prix et l'encombrement, le dispositif radar est de préférence totalement dépourvu d'affichage, en sorte que la vitesse mesurée peut uniquement être affichée ou exploitée par un dispositif externe au travers de l'interface 80 ou 80'. Le dispositif est en outre de préférence dépourvu de caméra ou d'appareil photographique, bien qu'un tel dispositif puisse être commandé lors du passage d'un véhicule par le module de communication 80', ou éventuellement être intégré au dispositif radar.

L'ensemble de ces mesures permet de réduire considérablement la consommation électrique du dispositif. Dans un mode de réalisation, il peut donc être alimenté par une batterie jetable ou rechargeable 9 avec une capacité limitée, par exemple une batterie ou une pile sensiblement plus petite qu'une batterie d'automobile, par exemple une batterie ou un jeu de batterie de moins de 150 grammes et permettant de stocker moins de 10 Ampères-heures.

Le fait de disposer de deux microprocesseurs 1, 5 distincts est avantageux afin de pouvoir utiliser des cycles de veille distincts; le processeur de signal 5, plus gourmand, est ainsi mis en veille plus souvent et/ou plus profondément que le microcontrôleur 1 ou les moyens de traitement correspondants. En outre, cette disposition simplifie la mise à jour à distance du firmware des deux processeurs via l'interface réseau 80 ou 80' ; un processeur peut programmer l'autre pendant la mise à jour.

Selon un aspect, le dispositif comporte une carte de circuit imprimé (PCB) agencée comme suit :
- La partie supérieure du PCB comporte le module avec les deux antennes 30, 31, l'oscillateur 32, le mixeur 33, les deux processeurs 1 et 5, la mémoire 7, les amplificateurs opérationnel 4, et les divers éléments électroniques associés.
- La partie inférieure comporte l'interface de communication 80, 80' et son alimentation.

L'ensemble du dispositif peut être intégré dans un volume inférieur à un litre, y compris la batterie 9 et les antennes. Ce dispositif peut ainsi aisément être dissimulé dans un élément de mobilier urbain, un poteau etc.

Nous allons maintenant décrire le procédé mis en oeuvre par ce dispositif.

Dans un mode préférentiel, le microcontrôleur 1 (ou une logique câblée) fait fonctionner le module Doppler 3 en mode pulsé lors de la détection, à une fréquence d'environ 500 Hz, avec des impulsions d'une durée de 20 usec, soit un duty-cycle de 1%. Cette alimentation pulsée est utilisée pour la détection de véhicule à l'aide de l'amplificateur 40. Suite à la détection d'un véhicule, l'alimentation pulsée est ensuite remplacée momentanément par une alimentation continue, ou par un autre rapport de cycle, afin de mesurer la vitesse du véhicule.

Dans une variante, à intervalles réguliers, par exemple 4 à 6 fois par seconde, le microcontrôleur 1 envoie au magnétomètre 2 un signal afin de vérifier si le champ magnétique est perturbé par un véhicule. Cette étape est répétée aussi longtemps qu'aucune perturbation n'est détectée. Le microcontrôleur 1 peut se mettre de lui-même en mode de veille partielle entre deux interrogations.

Dans une autre variante, le microcontrôleur 1 est en mode de veille et est réveillé par un magnétomètre intelligent, par le comparateur 41, ou par un autre capteur, au passage d'un véhicule. Le réveil par un magnétomètre exige cependant d'alimenter ce dernier en permanence, ou avec un rapport de cycle élevé incompatible avec une très basse consommation.

Lorsque le microcontrôleur 1 reçoit cette information du passage d'un véhicule, il envoie une instruction au processeur de signal 5 pour sortir ce dernier du mode de veille. Si cette information ne provient pas déjà du magnétomètre, le magnétomètre est sorti du mode de veille et le processeur de signal effectue tout d'abord une série de mesure du champ magnétique au moyen du/des magnétomètre(s). Simultanément, ou dès la fin de la perturbation du champ magnétique par le véhicule, le processeur 5 envoie une commande à l'oscillateur 32 afin d'émettre un signal radar en direction du véhicule. Comme indiqué, le module Doppler 3 est alimenté en continu momentanément suite à la détection d'un véhicule. L'amplificateur 4 est également sorti à ce moment du mode de veille. Une mesure de vitesse est alors effectuée.

Le processeur de signal 5 effectue ensuite des tests optionnels pour vérifier si le passage d'un véhicule est confirmé. Ces tests de plausibilité peuvent se baser sur les signaux fournis par le premier amplificateur 40, par le second amplificateur 4, par le magnétomètre 2, etc, et permettent de contrôler préalablement si un véhicule dont la vitesse peut être déterminée est effectivement présent. Il est ainsi possible d'éliminer rapidement d'éventuelles fausses alertes si le comparateur 41 génère des signaux en dehors du passage d'un véhicule.

Si le passage d'un véhicule est confirmé, le processeur de signal calcule la transformée de Fourier (FFT) du signal Doppler reçu, afin de calculer la vitesse de ce véhicule et/ou de le classer de la manière décrite plus haut.

Le résultat de ces calculs est écrit directement dans la mémoire 7. Le processeur de signal 5 peut aussi commander la carte réseau 80 afin de transmettre les données à un dispositif externe 82, par exemple afin de les afficher immédiatement.

Le dispositif et le procédé de l'invention peuvent s'appliquer à la détection et à la mesure de vitesse de tout type de véhicule, objet ou personne, notamment de véhicules automobiles, de deux roues, de skieurs, etc.

## Revendications

1. Dispositif radar incluant dans un boîtier :
un module de détection de mouvement (3) par micro-ondes, générant un signal Doppler,
un processeur de signal (5) pour calculer une vitesse à partir dudit signal Doppler,
des moyens de traitement (1) pour faire passer le module et le processeur de signal d'un mode de détection de véhicule à un mode de mesure de vitesse et vice-versa,
un interface sans fil (8) pour transmettre ladite vitesse à un dispositif à distance,
un premier amplificateur à faible bande passante (40) pour amplifier ledit signal Doppler et pour générer un signal lorsqu'un véhicule passe à proximité du dispositif
**caractérisé en ce que**
ledit dispositif radar comprend une alimentation électrique autonome (9) pour alimenter ledit dispositif radar
lesdits moyens de traitement (1) sont agencés pour faire passer le processeur de signal (5) et/ou le module (3) du mode de détection à un mode de mesure de vitesse lorsqu'ils reçoivent ledit signal
le dit dispositif radar comprend un second amplificateur (4) avec une bande passante plus large que celle du premier amplificateur (40) pour amplifier ledit signal Doppler
ledit second amplificateur (4) étant alimenté uniquement lorsqu'un véhicule a été détecté à l'aide dudit premier amplificateur (40), de manière à permettre une mesure de la vitesse dudit véhicule.

2. Le dispositif de la revendication 1, lesdits moyens de traitement comportant un microcontrôleur (1) exécutant un programme informatique pour contrôler le mode de détection et le mode de mesure de vitesse du processeur de signal (5) et du module (3).

3. Le dispositif de l'une des revendications 1 ou 2, comportant un magnétomètre (2) pour détecter une perturbation du champ magnétique causée par un véhicule arrivant à proximité du dispositif et pour envoyer un signal de détection de perturbation aux moyens de traitement (1) en cas de détection d'une perturbation,
les moyens de traitement (1) étant agencés pour faire passer le processeur de signal (5) et/ou le module (3) du mode de détection à un mode de mesure de vitesse lorsqu'ils reçoivent ledit signal de détection de perturbation.

4. Le dispositif de la revendication 3, dans lequel la bande passante du premier amplificateur (40) permet une détection de véhicule lorsqu'il passe à proximité du dispositif, et dans lequel la bande passante du second amplificateur (4) permet une mesure de la vitesse du véhicule après sa détection et lorsqu'il s'éloigne du dispositif.

5. Le dispositif de l'une des revendications 3 à 4, comportant un compteur (1, 5) pour compter le nombre de véhicules détectés.

6. Le dispositif de l'une des revendications 3 à 5, comportant un classificateur (1, 5) pour classer les véhicules en fonction de leur longueur déterminée en tenant compte des signaux à la sortie du magnétomètre respectivement du premier amplificateur (40) et/ou du second amplificateur (4).

7. Le dispositif de l'une des revendications 3 à 6, le microcontrôleur (1) comprenant un programme informatique pour interroger périodiquement le magnétomètre (2) afin de vérifier la présence d'un véhicule.

8. Le dispositif de l'une des revendications 3 à 7, le magnétomètre n'étant alimenté que lors de la détection d'un véhicule.

9. Le dispositif de l'une des revendications 2 à 8, comportant une mémoire semi-permanente (7) pour stocker ladite vitesse,
le processeur de signal (5) contrôlant ladite mémoire semi-permanente (7) et ladite interface sans fil (8) afin de permettre une transmission de ladite vitesse.

10. Procédé de mesure de vitesse à l'aide d'un dispositif radar autonome électriquement, comprenant :
utilisation d'un module de détection de mouvement (3) par micro-ondes afin de générer un signal Doppler,
calcul d'une vitesse à partir dudit signal Doppler, en utilisant un processeur de signal (5),
passage du module et/ou du processeur de signal d'un mode de détection de véhicule à un mode de mesure de vitesse et vice-versa, sur la base des signaux fournis par des moyens de traitement (1),
transmission de ladite vitesse à un dispositif à distance avec une interface sans fil (8)
amplification dudit signal Doppler grâce à un premier amplificateur à faible bande passante (40) et génération d'un signal lorsqu'un véhicule passe à proximité du dispositif,
**caractérisé en ce que** il comprend aussi les étapes suivantes
alimentation électrique autonome (9) dudit dispositif radar,
passage du processeur de signal (5) et/ou du module (3) du mode de détection à un mode de mesure de vitesse suite à la génération dudit signal
amplification dudit signal Doppler grâce à un second amplificateur (4) avec une bande passante plus large que celle du premier amplificateur (40) afin de permettre une mesure de vitesse du véhicule
ledit second amplificateur étant alimenté uniquement suite à la détection d'un véhicule à l'aide du premier amplificateur (40).

11. Le procédé de la revendication 10, dans lequel lesdits moyens de traitement comprennent un microcontrôleur (1) pour faire passer ledit module en mode de mesure de vitesse en fonction des signaux reçus par un magnétomètre.

12. Le procédé de la revendication 11, dans lequel le véhicule est détecté à l'aide du premier amplificateur lorsqu'il passe à proximité du dispositif, et dans lequel la vitesse du véhicule est déterminée à l'aide du second amplificateur lorsqu'il s'éloigne du dispositif.

13. Le procédé de l'une des revendications 10 à 12, comportant une étape de classification des véhicules en fonction de leur longueur évaluée à partir des signaux délivrés par le magnétomètre (2) respectivement par le premier amplificateur (40) et/ou par le second amplificateur (4).

## Patentansprüche

1. Radargerät, welches in einem Gehäuse umfasst:
ein Mikrowellenbewegungserkennungsmodul (3), welches ein Dopplersignal erzeugt,
einen Signalprozessor (5) zur Berechnung einer Geschwindigkeit aufgrund des besagten Dopplersignals,
Verarbeitungsmittel (1), um das Modul und den Signalprozessor von einem Fahrzeugerkennungsmodus in einen Geschwindigkeitsmessmodus zu versetzen und zurück,
eine drahtlose Schnittstelle (8) zur Übermittlung der besagten Geschwindigkeit an eine Fernvorrichtung,
einen ersten Schmalbandverstärker (40) zur Verstärkung des besagten Dopplersignals und zur Erzeugung eines Signals, wenn ein Fahrzeug in der Nähe des Geräts fährt,
**dadurch gekennzeichnet,**
**dass** das besagte Radargerät eine netzunabhängige Stromversorgung (9) umfasst, um das besagte Radargerät zu versorgen,
**dass** die besagten Verarbeitungsmittel (1) so angeordnet sind, um den Signalprozessor (5) und/oder das Modul (3) von einem Erkennungsmodus in einen Geschwindigkeitsmessmodus zu versetzen, wenn sie das besagten Signal erhalten,
**dass** das besagte Radargerät einen zweiten Verstärker (4) umfasst, mit einer Bandbreite grösser als diejenige des ersten Verstärkers (40), um das besagte Dopplersignal zu verstärken,
wobei der besagte Verstärker (4) nur gespeist wird, wenn ein Fahrzeug mittels des ersten Verstärkers (40) erfasst wird, um eine Messung der Geschwindigkeit des besagten Fahrzeugs zu ermöglichen.

2. Das Gerät von Anspruch 1, worin die besagten Verarbeitungsmittel einen Mikrokontroller (1) umfassen, welcher ein Computerprogram ausführt, um den Erkennungsmodus und den Geschwindigkeitsmessmodus des Signalprozessors (5) und des Moduls (3) zu steuern.

3. Das Gerät eines der Ansprüche 1 oder 2, mit einem Magnetfeldstärkenmessgerät (2) zur Erkennung einer Störung im Magnetfeld, die durch ein in der Nähe der Vorrichtung ankommendes Fahrzeug verursacht wird, und im Falle, wo eine Störung ermittelt wird, um ein Störungserkennungssignal an die Verarbeitungsmittel (1) zu senden,
worin die Verarbeitungsmittel (1) so angeordnet sind, um den Signalprozessor (5) und/oder das Modul (3) von einem Erkennungsmodus in einen Geschwindigkeitsmessmodus zu versetzen, wenn sie das besagte Störungserkennungssignal erhalten.

4. Das Gerät von Anspruch 3, worin die Bandbreite des ersten Verstärkers (40) eine Erkennung eines in der Nähe des Geräts fahrenden Fahrzeugs ermöglicht und worin die Bandbreite des zweiten Verstärkers (4) eine Messung der Geschwindigkeit des Fahrzeugs ermöglicht, nachdem es erfasst wurde und während es sich vom Gerät entfernt.

5. Das Gerät eines der Ansprüche 3 bis 4, mit einem Zähler (1, 5) zur Zählung der Anzahl erfasster Fahrzeuge.

6. Das Gerät eines der Ansprüche 3 bis 5, mit einem Klassierer (1, 5) zur Klassifizierung der Fahrzeuge gemäss ihrer Länge, bestimmt unter Berücksichtigung der Signale am Ausgang des Magnetfeldstärkenmessgeräts bzw. des ersten Verstärkers (40) und/oder des zweiten Verstärkers (4).

7. Das Gerät eines der Ansprüche 3 bis 6, worin der Mikrokontroller (1) ein Computerprogram umfasst zur periodischen Befragung eines Magnetfeldstärkenmessgeräts (2), um das Vorhandensein eines Fahrzeugs zu überprüfen.

8. Das Gerät eines der Ansprüche 3 bis 7, worin das Magnetfeldstärkenmessgerät nur gespeist wird, wenn ein Fahrzeug erfasst wird.

9. Das Gerät eines der Ansprüche 2 bis 8, mit einem halbpermanenten Speicher (7) zur Speicherung der besagten Geschwindigkeit,
worin der Signalprozessor (5) den besagten halbpermanenten Speicher (7) und die besagte drahtlose Schnittstelle (8) steuert, um die Übermittlung der besagten Geschwindigkeit zu ermöglichen.

10. Geschwindigkeitsmessverfahren mittels eines netzunabhängigen Radargeräts, mit:
Verwendung eines Mikrowellenbewegungserkennungsmoduls (3), um ein Dopplersignal zu erzeugen,
Berechnung einer Geschwindigkeit aufgrund des besagten Dopplersignals unter Verwendung eines Signalprozessors (5),
Versetzung des Moduls und/oder des Signalprozessors von einem Fahrzeugerkennungsmodus in einen Geschwindigkeitsmessmodus und zurück, aufgrund der durch die Verarbeitungsmittel (1) gelieferten Signale,
Übermittlung der besagten Geschwindigkeit an eine Fernvorrichtung über eine drahtlose Schnittstelle (8),
Verstärkung des besagten Dopplersignals mittels eines ersten Schmalbandverstärker (40) und Erzeugung eines Signals, wenn ein Fahrzeug in der Nähe des Geräts fährt,
**dadurch gekennzeichnet, dass** es auch die folgenden Schritte umfasst:
die netzunabhängige Versorgung (9) des besagten Radargeräts,
das Versetzen des Signalprozessors (5) und/oder des Moduls (3) von einem Erkennungsmodus in einen Geschwindigkeitsmessmodus nach Erzeugung des besagten Signals,
Verstärkung des besagten Dopplersignals mittels eines zweiten Verstärkers (4), mit einer Bandbreite grösser als diejenige des ersten Verstärkers (40), um eine Messung der Geschwindigkeit des Fahrzeugs zu ermöglichen,
wobei der besagte Verstärker nur gespeist wird, wenn ein Fahrzeug mittels des ersten Verstärkers (40) ermittelt wird.

11. Das Verfahren von Anspruch 10, worin die besagten Verarbeitungsmittel einen Mikrokontroller (1) umfassen, um das besagte Modul abhängig von durch ein Magnetfeldstärkenmessgerät erhaltenen Signalen in einen Geschwindigkeitsmessmodus zu versetzen.

12. Das Verfahren von Anspruch 11, worin das Fahrzeug mittels des ersten Verstärkers erfasst wird, wenn es in der Nähe des Geräts fährt, und worin die Geschwindigkeit des Fahrzeugs mittels des zweiten Verstärkers ermittelt wird, wenn es sich vom Gerät entfernt.

13. Das Verfahren eines der Ansprüche 10 bis 12, mit einem Schritt der Klassifizierung der Fahrzeuge gemäss deren Länge, welche aufgrund der durch das Magnetfeldstärkenmessgerät (2) bzw. durch den ersten Verstärker (40) und/oder durch den zweiten Verstärker (4) gelieferten Signale bestimmt wird.

## Claims

1. Radar device having in a housing:
a microwave motion detection module (3) generating a Doppler signal,
a signal processor (5) for calculating a speed from said Doppler signal,
processing means (1) for switching the module and the signal processor from a vehicle detection mode to a speed-measuring mode and vice versa,
a wireless interface (8) for transmitting said speed to a remote device,
a first narrow-bandwidth amplifier (40) for amplifying said Doppler signal and for generating a signal when a vehicle passes close to the device,
**characterized in that**
said radar device includes a self-contained power supply (9) for powering said radar device,
said processing means (1) are arranged for switching the signal processor (5) and/or the module (3) from the detection mode to a speed-measuring mode when they receive said signal,
said radar device includes a second amplifier (4) with a bandwidth wider than that of the first amplifier (40) for amplifying said Doppler signal,
said second amplifier (4) being powered only when a vehicle has been detected by means of the first amplifier (40) so as to allow the speed of said vehicle to be measured.

2. The device of claim 1, said processing means including a microcontroller (1) executing a computer program to control the detection mode and the speed-measuring mode of the signal processor (5) and of the module (3).

3. The device of one of the claims 1 or 2, including a magnetometer (2) for detecting a change in the magnetic field caused by a vehicle arriving near the device and for sending a change-detection signal to the processing means (1) if a change has been detected,
wherein the processing means (1) are arranged for switching the signal processor (5) and/or the module (3) from the detection mode to a speed-measuring mode when they receive said change-detection signal.

4. The device of claim 3, wherein the bandwidth of the first amplifier (40) allows a vehicle to be detected when it passes close to the device, and wherein the bandwidth of the second amplifier (4) allows the speed of the vehicle to be measured after it has been detected and while it is moving away from the device.

5. The device of one of the claims 3 to 4, including a counter (1, 5) for counting the number of vehicles detected.

6. The device of one of the claims 3 to 5, including a classifier (1, 5) for classifying the vehicles according to their length determined by taking into account the signals at the output of the magnetometer respectively of the first amplifier (40) and/or of the second amplifier (4).

7. The device of one of the claims 3 to 6, wherein the microcontroller (1) includes a computer program to interrogate periodically the magnetometer (2) in order to check whether a vehicle is present.

8. The device of one of the claims 3 to 7, wherein the magnetometer is powered only when a vehicle has been detected.

9. The device of one of the claims 2 to 8, including a semi-permanent memory (7) for storing said speed,
wherein the signal processor (5) controls said semi-permanent memory (7) and said wireless interface (8) in order to allow said speed to be transmitted.

10. Speed-measuring method by means of an electrically autonomous radar device, including:
use of a microwave motion detection module (3) in order to generate a Doppler signal,
calculating a speed from said Doppler signal, by using a signal processor (5),
switching the module and/or the signal processor from a vehicle detection mode to a speed-measuring mode and vice versa, on the basis of the signals supplied by the processing means (1),
transmission of said speed to a remote device with a wireless interface (8),
amplification of said Doppler signal by means of a first narrow-bandwidth amplifier (40) and generation of a signal when a vehicle passes close to the device,
**characterized in that** it also comprises the following steps:
self-contained power supplying (9) of said radar device,
switching of the signal processor (5) and/or the module (3) from a detection mode to a speed-measuring mode following the generation of said signal,
amplification of said Doppler signal by means of a second amplifier (4) with a bandwidth wider than that of the first amplifier (40) in order to allow the speed of the vehicle to be measured,
said second. amplifier being powered only once a vehicle has been detected by means of the first amplifier (40).

11. The method of claim 10, wherein said processing means include a microcontroller (1) for switching said module to speed-measuring mode according to the signals received by a magnetometer.

12. The method of claim 11, wherein the vehicle is detected by means of the first amplifier when it passes close to the device and wherein the speed of the vehicle is determined by means of the second amplifier when moving away from the device.

13. The method of one of the claims 10 to 12, including a step of classifying the vehicles according to their length evaluated from the signals supplied by the magnetometer (2) respectively by the first amplifier (40) and/or the second amplifier (4).
